# EUROPÄISCHE PATENTSCHRIFT

(11) **EP 1 422 040 B1**
(45) Veröffentlichungstag und Bekanntmachung des Hinweises auf die Patenterteilung: **04.10.2006**
(21) Anmeldenummer: 03025778.6
(22) Anmeldetag: 11.11.2003
(51) Int. Cl.: B29C 45/14, H01H 50/02, B29C 45/16

(54) **Verfahren zum Herstellen eines Verbundwerkstücks durch Kunststoffspritzen**
Method for producing a composite article by injection moulding
Procédé pour produire un article composite par moulage par injection

(30) Priorität: 25.11.2002 DE 10254912
(43) Veröffentlichungstag der Anmeldung: 26.05.2004
(73) Patentinhaber: Tyco Electronics AMP GmbH, 64625 Bensheim (DE)
(72) Erfinder: Ehrlich, Heinz-Michael, 13599 Berlin (DE); Pietsch, Karsten Dr., 13469 Berlin (DE); Theen Vodegel, Cornelius, 10555 Berlin (DE)
(74) Vertreter: Hirsch, Peter

(56) Entgegenhaltungen:
- EP-A- 0 600 634
- WO-A-00/76741
- WO-A-03/044816
- JP-A- 7 320 584
- US-A1- 2002 070 237
- PATENT ABSTRACTS OF JAPAN vol. 012, no. 296 (M-731), 12. August 1988 (1988-08-12) & JP 63 074617 A (AKINOBU TATEBAYASHI), 5. April 1988 (1988-04-05)

## Beschreibung

Die Erfindung betrifft ein Verfahren zum Herstellen eines Verbundwerkstücks durch Kunststoffspritzen in Form eines Gehäuses für ein elektrisches Bauteil, z.B. ein Relais.

Die Erfindung betrifft weiterhin ein Form zur Durchführung des Verfahrens.

Aus der DE 100 27 357 A1 ist ein Relais mit einer Handbetätigungseinrichtung und einer Taste bekannt, bei der die Taste in einem Gehäuse, insbesondere der Oberseite eines Gehäusedeckels eingeformt ist. Unterhalb der Taste befindet sich eine Hebelanordnung zum Betätigen des Relais mit Hilfe der Taste. Damit das Gehäuse wasserdicht ist, ist die Taste einstückig mit dem Gehäusedeckel geformt. Um die Taste gegenüber dem Gehäusedeckel betätigen, d.h. bewegen zu können, enthält die Taste einen zentralen Tastbereich relativ großer Dicke, der von einem relativ dünnwandigen Membranbereich umgeben ist, der in die Oberseite des Gehäuses übergeht. Dies stellt insofern eine Verbesserung gegenüber dem früher üblichen Einkleben einer Gummitaste in ein Loch eines Gehäusedeckels dar, als eine einfachere Herstellung und eine bessere Wasserdichtigkeit im Bereich des Übergangs zwischen Taste und Gehäusedeckel erzielt wird. Das wasserdichte Einkapseln von Schaltern und Bauelementen ist von jeher ein Problem gewesen, welches sich dem Fachmann häufig gestellt hat, und welches auf unterschiedliche Weise gelöst worden ist. Die DE-A 1 465 355 zeigt einen Mikroschalter mit einem Gehäuse und einer darin eingeformten Taste. Das Einkleben einer Gummitaste in eine Öffnung eines Relaisgehäuses ist aus der JP-A-08222105 bekannt.

Aus anderen Gebieten der Technik ist bekannt, Gebrauchsgegenstände aus unterschiedlichen Kunststoff-Komponenten als Verbundwerkstücke herzustellen. So zum Beispiel ist der WO 96/10934 eine Zahnbürste entnehmbar, die als Verbundwerkstück aus einer sogenannten Weichkomponente und einer Hartkomponente zusammengesetzt ist. Die Weichkomponente ist ein Kunststoff mit - im Vergleich zu der Hartkomponente - relativ kleinem Elastizitätsmodul, die Hartkomponente ist ein Material mit einem relativ großen Elastizitätsmodul. Die Weichkomponente dient zur Ausbildung eines Federteils der Zahnbürste zwischen Bürstenkopf und Handgriff, so daß die Weichkomponente dem Federteil Elastizität verleiht. Außerdem befindet sich ein Weichkomponenten-Abschnitt im Griffbereich der Zahnbürste. In der WO 96/10934 sind unterschiedliche Verfahren zum Herstellen der Zahnbürste angegeben. Bei einem Verfahren wird zunächst die Weichkomponente hergestellt, und auf die Weichkomponente wird die Hartkomponente aufgespritzt. Zu diesem Zweck wird die Weichkomponente in einem Formhohlraum einer Form eingebracht, bevor die Hartkomponente angespritzt wird.

Das Anspritzen der Hartkomponente in einem Formhohlraum macht es erforderlich, das als Weichkomponente ausgebildete Teil vor dem Einspritzen des Hartkunststoffmaterials in den Formhohlraum zu fixieren. Zu diesem Zweck enthält z.B. das als Weichkomponente dienende Federteil zwischen Bürstenkopf und Stiel der Zahnbürste beidseitige Vorsprünge "zum Positionieren innerhalb der Spritzgießform". Wenn das Material der Hartkomponente in den Formhohlraum eingespritzt wird, umgibt das Material die Weichkomponente praktisch allseitig.

Aus der WO 96/10934 läßt sich auch eine Ausführungsform entnehmen, bei der zunächst die Hartkomponente geformt wird, woraufhin dann Teilbereiche der Hartkomponente mit einer Weichkomponente umspritzt werden. Insbesondere wird bei dieser Ausführungsform von Zweikomponenten-Spritzgießverfahren Gebrauch gemacht.

In WO 00/76741 A wird auf die Herstellung eines Kunststoff-Verbundwerkstoffs Bezug genommen, wobei in einem Anwendungsbeispiel als Teilkomponente dieses Verbundwerkstoffs ein Ausgleichsbehälter eines Kraftfahrzeug-Kühlsystems und als andere Teilkomponente eine elastische Dichtung genannt ist. Der Ausgleichsbehälter aus Kunststoff wird bei dessen Ausformung mittels eines Formkörpers, in welchen das Kunststoffmaterial eingespritzt wird, mit einem zuvor geformten Dichtungselement verbunden. Die Dichtungselemente aus elastischem Material weisen hervorstehende Lappen oder Fahnen auf, die in den Hohlraum hineinragen und sich während des Einspritzens des Kunststoffmaterials in den Hohlraum abbiegen. Dadurch wird die Randzone des geformten Ausgleichsbehälters mechanisch mit den Dichtungselementen verbunden.

In JP 63074617 A wird eine Vorrichtung zur Fertigung eines tragbaren Behälters beschrieben, bei der ein elastisches Teil zwischen hervorstehende Teile von Formhälften gepresst wird, so dass der innerhalb der Form hervorstehende Teil des elastischen Werkstücks mit einem in den Hohlraum eingespritzten Material verbunden werden kann. Beim Einpressen des elastischen Werkstücks werden dessen Außenkonturen verformt. Innerhalb des geformten Hohlraums werden die Außenkonturen des elastischen Werkstücks von dem eingespritzten Material umgeben.

JP 07320584 A betrifft die Herstellung einer Tastenanordnung für eine Tastatur, bei der ein Schalter bzw. entsprechende Kontaktelemente über eine jeweilige Taste betätigt bzw. kontaktiert werden. Jede Taste weist dabei einen Tastenteil zum Betätigen der Taste auf sowie einen variablen Verbindungsteil, der mit einem flachen Basisteil verbunden ist und durch Betätigen des Tastenteils verformt wird. Ein Rahmen weist einen Absatz auf und der flache Basisteil ist mit einer Kleberschicht versehen, die zur Verbindung mit dem Absatz des Gehäuses dient. Weiterhin ist in diesem Dokument die Herstellung einer solchen Tastenanordnung in einem Gehäuse beschrieben.

Die vorliegende Erfindung betrifft ein Verfahren zum Herstellen eines Verbundwerkstücks durch Kunststoffspritzen, wobei das Verbundwerkstück gemäß obiger Definition mindestens eine Weichkomponente und mindestens eine Hartkomponente besitzt. Speziell betrifft die Erfindung das Verfahren zum Herstellen eines Gehäuses bzw. eines Gehäusedeckels für ein elektrisches Bauteil, insbesondere eines Relais, ähnlich dem, wie es in der eingangs erläuterten DE 100 27 357 A1 gezeigt ist. Speziell betrifft die Erfindung das Fixieren der Weichkomponente im Formhohlraum der Form vor dem Anspritzen der Hartkomponente.

Der Erfindung liegt die Aufgabe zugrunde, ein Verfahren der eingangs genannten Art anzugeben, mit dem im Zuge einer Zweikomponententechnik in einer starren Kappe ein flexibler Bereich realisiert werden kann, die z. B. als Taste verwendet werden kann.

Gelöst wird diese Aufgabe erfindungsgemäß durch ein Verfahren zum Herstellen eines Verbundwerkstücks durch Kunststoffspritzen in From eines Gehäuses für ein elektrisches Bauteil, z.B. eines Relais, gemäß den Merkmalen des Patentanspruchs 1, insbesondere umfasst es die Schritte:
a) eine aus relativ weichem Kunststoff vorab gespritzte Komponente, im folgenden als Weichkomponente bezeichnet, wird in dem Formhohlraum einer zwei Formenhälften aufweisenden Form derart fixiert, daß nur der Umfangsbereich dem befüllbaren Formhohlraum exponiert ist, und
b) eine aus relativ hartem Kunststoff bestehende Komponente, im folgenden als Hartkomponente bezeichnet, wird an den Umfangsbereich der Weichkomponente anspritzt.

Bei dem erfindungsgemäßen Verfahren wird die Weichkomponente "von oben und unten" eingeklemmt, so daß nur der Umfangsbereich exponiert ist und mit der eingespritzten Hartkomponente in Berührung tritt. Es kommt zu einer innigen Bindung zwischen Weichkomponente und Hartkomponente, so daß auf Hinterschneidungen, mithin die üblichen mechanischen Kopplungen der beiden Komponenten, verzichtet werden kann. Die als Weichkomponente bzw. Hartkomponente verwendeten Materialien sind dem Fachmann bekannt. Die üblichen, für Hartkomponenten verwendeten Materialien besitzen in der Regel eine größere thermische Stabilität als die Materialien der Weichkomponente. Dadurch, daß lediglich der Umfangsbereich der Weichkomponente mit dem Material der Hartkomponente in Berührung tritt, wird das thermische Anschmelzen des Umfangsbereichs der Weichkomponente durch das Material der Hartkomponente beschränkt.

Um ein sicheres Halten der Weichkomponente in deren vorbestimmte Lage innerhalb des Formhohlraums zu garantieren, sieht die Erfindung in einer Weiterbildung vor, daß die Weichkomponente zum Fixieren kraftschlüssig mit mindestens einer Formhälfte, vorzugsweise mit beiden Formhälften gekoppelt wird. Die Kraftschlüssigkeit wird in einer ersten Variante der Erfindung dadurch erreicht, daß die Weichkomponente zwischen den beiden Formhälften eingequetscht wird. Bevorzugt wird demgegenüber jedoch eine formschlüssige Kopplung zwischen der Form und der Weichkomponente. Dabei wird insbesondere die Weichkomponente in den Formhohlraum der geöffneten Form eingesetzt. Anschließend wird die Form soweit geschlossen, daß die Weichkomponente bei geringer Verformung zusammengedrückt wird, und anschließend wird das Material der Hartkomponente in den Formhohlraum eingespritzt.

Um eine nicht nur kraftschlüssige, sondern demgegenüber verbesserte formschlüssige Verbindung zwischen der Weichkomponente und der Form zu erreichen, schafft die Erfindung eine Form (und deren Verwendung) zum Durchführen des oben erläuterten, erfindungsgemäßen Verfahrens, wobei die Form gemäß der Erfindung auf die Ausgestaltung der Weichkomponente abgestimmt ist und - umgekehrt, und zwar folgendermaßen: das Verbundwerkstück weist auf mindestens einer Formhälfte zugewandten Seite eine an sich zumindest entlang einem Teil des Umfang der Weichteilkomponente erstreckende Vertiefung vorbestimmter Tiefe auf, und die Form besitzt mindestens einen Klemmvorsprung, der bei geschlossener Form in die Vertiefung eingreift. Durch das Zusammenwirken des Klemmvorsprungs mit der Vertiefung wird die formschlüssige Verbindung zwischen der Weichkomponente und der Form erreicht.

Besonders bevorzugt ist hierbei, daß die in Schließrichtung der Formhälften gemessene Tiefe des Klemmvorsprungs größer ist als die Tiefe der Vertiefung des Verbundwerkstücks. Hierdurch quetscht der Klemmvorsprung die Weichkomponente im Bereich von deren Vertiefung ein. Durch dieses Zusammenquetschen wird nicht nur eine außerordentlich gute Fixierung der Weichkomponente im Formhohlraum erreicht, sondern außerdem weicht dadurch das Material der Weichkomponente etwas nach außen aus, so daß nach dem Anspritzen der Hartkomponente der Übergangsbereich zwischen Hartkomponente und Weichkomponente unter Spannung steht. Dies ist insbesondere von Vorteil bei einem mit wasserdichtem Gehäuse versehenen Relais, wie es eingangs erläutert wurde; denn dadurch erhält die Taste besondere Elastizität.

In einer speziellen Ausgestaltung der Erfindung ist die Form ausgebildet zum Formen eines Gehäuses mit eingearbeiteter, im Grundriss kreisförmiger Taste als Weichkomponente, wobei die Vertiefung als Ringnut in einer sich entlang dem Umfang der Taste erstreckenden Dichtklemmzone ausgebildet ist. Vorzugsweise befinden sich zwei Ringnuten auf den einander abgewandten Seiten der Taste, welche der oberen bzw. der unteren Formhälfte zugewandt sind. Die Begriffe "oben" und "unten" dienen hier lediglich zur Unterscheidung der einen Seite der Form bzw. des Werkstücks von der anderen Seite der Form und des Werkstücks, sind jedoch nicht beschränkend zu verstehen, beispielsweise im Sinn einer Einbaulage oder ähnlichem.

Wie bereits erwähnt, sind dem Fachmann die einschlägigen Werkstoffe für die Hartkomponente und die Weichkomponente bekannt. Als Material für die Hartkomponente kommt z.B. PBT (Polybutadyenteriftalat) oder PA (Polyamid) in Betracht. Als Material für die Weichkomponente kommt z.B. ein TPE (Thermoplastischer Polyester-Elastomer) in Betracht.

Im folgenden werden Ausführungsbeispiele der Erfindung anhand der Zeichnungen näher erläutert. Es zeigen:
Fig. 1 eine perspektivische Ansicht eines Gehäusedeckels eines Relais mit eingeformter, kreisförmiger Taste;
Fig. 2 einen Querschnitt durch die in Fig. 1 gezeigte Taste;
Fig. 3 eine perspektivische Ansicht der in Fig. 1 gezeigten Anordnung, wobei das Gehäuse in Längsrichtung mittig aufgeschnitten ist, und
Fig. 4 eine Querschnittansicht durch einen Teilbereich einer zum Herstellen der in den Figuren 1-3 dargestellten Anordnung verwendeten Form.

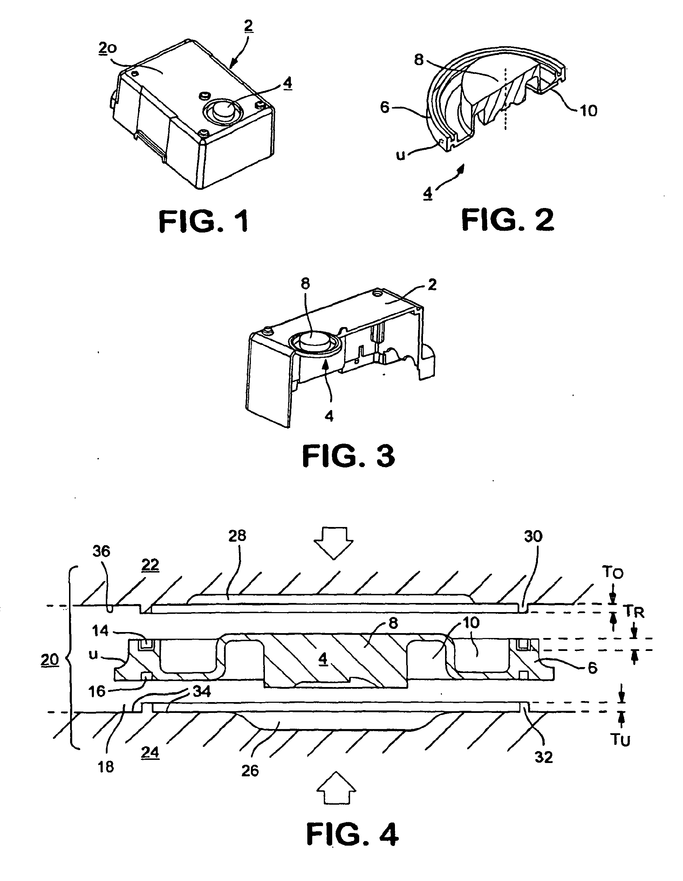

Fig. 1 zeigt einen Gehäusedeckel 2 eines hier nicht näher dargestellten Relais, das für Prüfzwecke eine Hebelanordnung zur Betätigung des Relais aufweist, wobei sich die Hebelanordnung unterhalb einer Taste 4 in der Oberseite 2o des Gehäusedeckels befindet. Der Gehäusedeckel 2 wird im folgenden allgemein auch als ein "Gehäuse" bezeichnet, obschon zu dem Gesamtgehäuse noch ein Gehäuseunterteil mit dem eigentlichen Relais gehört.

Das Gehäuse 2 besteht im wesentlichen aus einem im folgenden als "Hartkomponente" bezeichneten Kunststoffformteil, beispielsweise aus PBT, in das die Taste 4, im folgenden als "Weichkomponente" bezeichnet, eingearbeitet ist, wobei die Taste aus beispielsweise dem oben erwähnten "Hytrel" besteht.

Durch Drücken auf die Taste 4 wirkt die Unterseite der Taste auf die darunter befindliche Hebelanordnung des Relais ein und betätigt das Relais.

Es versteht sich, daß die Erfindung nicht nur auf das hier speziell beschriebene Relais mit der in das Gehäuse eingearbeiteten Taste beschränkt ist, sondern daß auch andere Verbundwerkstücke aus Hartkomponente und Weichkomponente (oder mehreren Hartkomponenten und mehreren Weichkomponenten) hergestellt werden können, beispielsweise Schaltergehäuse mit integraler wasserdichter Abdeckung und ähnliches.

Wie Fig. 2 zeigt, besitzt die dort im Querschnitt dargestellte Taste 4 eine sich über den Umfang erstreckende Dichtklemmzone 6, einen zentralen Tastendruckbereich 8, und eine Membranstruktur 10, die die Dichtklemmzone 6 mit dem Tastendruckbereich verbindet. Die Taste 4 steht mit der Oberseite 2o des Gehäuses 2 ausschließlich über den Umfangsbereich U außerhalb der Dichtklemmzone 6 in Verbindung, wie im folgenden näher erläutert wird.

Fig. 4 zeigt einen Querschnitt durch eine Form 20, die zum Herstellen des in Figur 1 und 3 dargestellten Gehäuses 2 mit der Taste 4 verwendet wird.

Zunächst sei die Struktur der Taste 4 näher erläutert: an den Tastendruckbereich 8 schließt sich die Membranstruktur 10 und an diese wiederum die Dichtklemmzone 6 an. Die Dichtklemmzone 6 sitzt auf der in Fig. 4 nach oben weisenden Seite (Oberseite) eine Ringnut 14, auf der Unterseite befindet sich eine Ringnut 16. Beide Ringnuten 14und 16 haben hier die gleich Tiefe TR, gemessen von der Oberseite bzw. der Unterseite der Dichtklemmzone 6 bis zum Boden der jeweiligen Ringnut.

Die Form 20, von der in Fig. 4 nur ein Teil dargestellt ist, enthält zwei Formhälften, d.h. eine obere Formhälfte 22 und eine untere Formhälfte 24, die in Pfeilrichtung aufeinander zu bewegt werden können, nachdem die hier zur besseren Darstellung in der Mitte zwischen den Formhälften dargestellte Taste 4 als Weichkomponente auf beispielsweise die untere Formhälfte 24 derart aufgesetzt wurde, daß ein ringförmiger Klemmvorsprung 32 der unteren Formhälfte 24 in die untere Ringnut 16 der Dichtklemmzone eingreift. Nach dem Einsetzen der vorgefertigten Taste 4 in dem Formhohlraum 18 mit Sitz der Ringnut 16 auf dem Klemmvorsprung 32 wird die obere Formhälfte 22 abgesenkt, d.h. die beiden Formhälften 22 und 24 werden aufeinander zu bewegt, so daß schließlich ein oberer Klemmvorsprung 30 der oberen Formhälfte 22 in der oberen Ringnut 24 der Dichtklemmzone 6 sitzt.

Die in Bewegungsrichtung der Formhälften gemessene Tiefe TU bzw. TO des unteren bzw. des oberen Dichtvorsprungs 32, 30 ist jeweils größer als die Tiefe TR der beiden Ringnuten 14 und 16.

Die beiden Formhälften 22 und 24 werden so weit abgesenkt, bis die seitlich an die Klemmvorsprünge 32 und 30 anschließenden Bereiche 34 und 36 der Formhälften an der Unterseite bzw. der Oberseite der Dichtklemmzone 6 fest anliegen. Weil die Tiefen TO und TU der Klemmvorsprünge beide größer sind als die Tiefe TR der Ringnuten 14 und 16, wird die Dichtklemmzone 6 eingequetscht, so daß sich ihr Außenumfang U etwas nach außen verlagert. In diesem Zustand wird in den Formhohlraum 18 der Form 20 das Material der Hartkomponente eingespritzt, so daß es sich im Bereich des Umfangs U der Dichtklemmzone mit dieser chemisch verbindet, wobei die Dichtklemmzone im Bereich des Außenumfangs U etwas angeschmolzen wird. Aufgrund der kraftschlüssigen Verbindung der als Weichkomponente fungierenden Taste 4 mit den beiden Formhälften 22 und 24 kann die Taste 4 während des Einspritzens des Materials der Hartkomponente nicht verrutschen. Nach Öffnen der Form schließt die Oberseite 2o des Gehäuses 2 bündig an den Außenumfang U der Taste 4 an.

Wie in Fig. 4 außerdem erkennbar ist, besitzt die Form in den beiden Formhälften 24 und 22 noch Ausnehmungen 26 bzw. 28, in die die überstehenden Bereiche des Tastendruckbereichs 8 hineinragen. In diesen Bereich gelangt kein Material der Hartkomponente, da dieser Bereich durch die innige Verbindung zwischen der Dichtklemmzone und den Klemmvorsprüngen 32 und 30 hermetisch abgedichtet ist.

Obschon in Fig. 4 durchgehendere Ringnuten 14, 16 bzw. durchgehende Klemmvorsprünge 30, 32 dargestellt sind, kann man auch daran denken, insbesondere die ringförmigen Klemmvorsprünge 30 und 32 nur über Teilbereiche des Umfangs anzuordnen, so daß nach wie vor eine formschlüssige Verbindung zwischen der Taste 4 und den Formhälften gegeben ist. Es kann auch ausreichen, nur an der Oberseite oder nur an der Unterseite eine Ringnut 14 bzw. 16 auszubilden, während die andere Seite flach an der Fläche der betreffenden Formhälfte anliegt.

## Patentansprüche

1. Verfahren zum Herstellen eines Verbundwerkstücks durch Kunststoffspritzen in Form eines Gehäuses (2) für ein elektrisches Bauteil, umfassend die Schritte:
a) eine aus relativ weichem Kunststoff vorab gespritzte Komponente, im folgenden als Weichkomponente (4) bezeichnet, mit einer sich über den Umfang erstreckenden Dichtklemmzone (6) aufweisend eine Unterseite und eine Oberseite, und mit einem äußeren Umfangsbereich (U), der zwischen der Oberseite und der Unterseite der Dichtklemmzone angeordnet ist, wird in dem Formhohlraum (18) einer zwei Formhälften (22, 24) aufweisenden Form (20) in der Dichtklemmzone (6) derart fixiert, daß nur der Umfangsbereich (U) der Weichkomponente (4) außerhalb der Dichtklemmzone (6) dem befüllbaren Formhohlraum (18) exponiert ist, und
b) eine aus relativ hartem Kunststoff bestehende Komponente, die einen Teil des Gehäuses (2) bildet, im folgenden als Hartkomponente (2) bezeichnet, wird an den äußeren Umfangsbereich (U) der Weichkomponente (4) angespritzt, so dass die Weichkomponente (4) mit der Hartkomponente (2) ausschließlich über den Umfangsbereich (U) außerhalb der Dichtklemmzone (6) in Verbindung steht und die Hartkomponente (2) bündig an den äußeren Umfangsbereich (U) anschließt.

2. Verfahren nach Anspruch 1, **dadurch gekennzeichnet, daß** die Weichkomponente (4) zum Fixieren kraftschlüssig mit mindestens einer Formhälfte (22, 24), vorzugsweise mit beiden Formhälften (22, 24) gekoppelt wird.

3. Verfahren nach Anspruch 2, **dadurch gekennzeichnet, daß** die kraftschlüssige Kopplung eine formschlüssige Kopplung ist.

4. Verfahren nach einem der Ansprüche 1 bis 3, **dadurch gekennzeichnet, daß** die Weichkomponente (4) in den Formhohlraum (18) der geöffneten Form (20) eingesetzt, dann die Form (20) soweit geschlossen wird, daß die Weichkomponente (4) bei geringer Verformung zusammengedrückt wird, und anschließend das Material der Hartkomponente (2) in den Formhohlraum eingespritzt wird.

5. Verfahren nach einem der vorhergehenden Ansprüche, **dadurch gekennzeichnet, daß** das Gehäuse (2) als ein Gehäuse eines Relais ausgebildet wird.

## Claims

1. Process for manufacturing by injection moulding a composite workpiece in the form of a casing (2) for an electrical component, comprising the following steps:
a) a pre-moulded component of relatively flexible plastic, in the following called flexible component (4), with a tight clamping zone (6) extending around the periphery and presenting an underside and a top, and with an outer peripheral area (U) which is arranged between top and underside of the tight clamping zone, is fixed in the tight clamping zone (6) in the mould cavity (18) of a mould (20) with two mould halves (22, 24) so that only the peripheral area (U) of the flexible component (4) outside the tight clamping zone (6) is exposed to the mould cavity (18) capable of being filled, and
b) a component consisting of relatively rigid plastic, which forms part of the casing (2), in the following called rigid component (2), is injection-moulded on to the outer peripheral area (U) of the flexible component (4) so that the flexible component (4) is in contact with the rigid component (2) exclusively via the peripheral area (U) outside the tight clamping zone (6) and that the rigid component (2) is flush with the outer peripheral area (U).

2. Process in accordance with claim 1, **characterised in that** for fixing purposes the flexible component (4) is coupled non-positively with at least one mould half (22,24), preferably with both mould halves (22, 24).

3. Process in accordance with claim 2, **characterised in that** the non-positive coupling is a positive coupling.

4. Process in accordance with one of claims 1 to 3, **characterised in that** the flexible component (4) is inserted into the mould cavity (18) of the open mould (20), the mould (20) is then closed to the point where the flexible component (4) is compressed under insignificant deformation, after which the material of rigid component (2) is injected into the mould cavity.

5. Process in accordance with one of the foregoing claims, **characterised in that** the casing (2) is designed as casing of a relay.

## Revendications

1. Procédé de production d'un article composite par moulage par injection, sous forme d'un boîtier (2) pour un composant électrique, comprenant les étapes ci-dessous :
a) un composant moulé d'avance par injection composé d'un plastique relativement mou, appelé ci-dessous composant mou (4), comportant une zone de serrage étroit (6) s'étendant au-delà de la circonférence, comportant un côté inférieur et un côté supérieur, et avec une zone circonférentielle externe (U) agencée entre le côté supérieur et le côté inférieur de la zone de serrage étroit, est fixé dans la cavité du moule (18) d'un moule (20) comportant deux moitiés de moule (22, 24) dans la zone de serrage étroit (6), de sorte que seule la région circonférentielle (U) du composant mou (4) est exposée à l'extérieur de la zone de serrage étroit (6) à la cavité du moule à remplissage (18) ; et
b) un composant composé d'un plastique relativement dur, constituant une partie du boîtier (2), appelé ci-dessous composant dur (2), est moulé par injection sur la zone circonférentielle externe (U) du composant mou (4), de sorte que le composant mou (4) est en liaison avec le composant dur (2), de manière exclusive par l'intermédiaire de la zone circonférentielle (U) à l'extérieur de la zone de serrage étroit (6), le composant dur (2) affleurant ainsi la zone circonférentielle externe (U).

2. Procédé selon la revendication 1, **caractérisé en ce que** le composant mou (4) est accouplé par adhérence à au moins une moitié du moule (22, 24), en vue de la fixation, de préférence avec les deux moitiés du moule (22, 24).

3. Procédé selon la revendication 2, **caractérisé en ce que** l'accouplement par adhérence est un accouplement par engagement positif.

4. Procédé selon l'une quelconque des revendications 1 à 3, **caractérisé en ce que** le composant mou (4) est inséré dans la cavité de moule (18) du moule (20) ouvert, le moule (20) étant ensuite fermé de sorte que le composant mou (4) est comprimé par une légère déformation, le matériau du composant dur (2) étant ensuite injecté dans la cavité du moule.

5. Procédé selon l'une des revendications précédentes, **caractérisé en ce que** le boîtier (2) est constitué par un boîtier d'un relais.
